Europäisches Patentamt
European Patent Office
Office européen des brevets

(11) Publication number: 0 148 425
A2

# EUROPEAN PATENT APPLICATION

(21) Application number: 84114888.5

(22) Date of filing: 07.12.84

(51) Int. Cl.⁴: G 05 B 19/405

(30) Priority: 09.12.83 JP 231331/83

(43) Date of publication of application: 17.07.85
Bulletin 85/29

(84) Designated Contracting States: DE FR GB

(71) Applicant: HITACHI, LTD., 6, Kanda Surugadai 4-chome
Chiyoda-ku, Tokyo 100 (JP)
Applicant: HITACHI KEIYO ENGINEERING CO., LTD.,
1-1, Higashinarashino-7-chome, Narashino-shi
Chiba-ken (JP)

(72) Inventor: Imanishi, Keiji, 980-5, Mimomicho-4-chome,
Narashino-shi (JP)

(74) Representative: Patentanwälte Beetz sen. - Beetz jun.
Timpe - Siegfried - Schmitt-Fumian,
Steinsdorfstrasse 10, D-8000 München 22 (DE)

## (54) Method and apparatus for controlling robot.

(57) With respect to a programmed movement path of a robot moving member (326; 301-305) between predetermined teaching coordinate points (N, N+1), it is decided whether or not a coordinate value of the robot moving member in a stopped condition is within a predetermined allowable path range of the programmed path. And when the coordinate value of the robot moving member in the stopped condition is in the allowable path range, the robot (300) is controlled to move from the stopping position toward the next target teaching point.

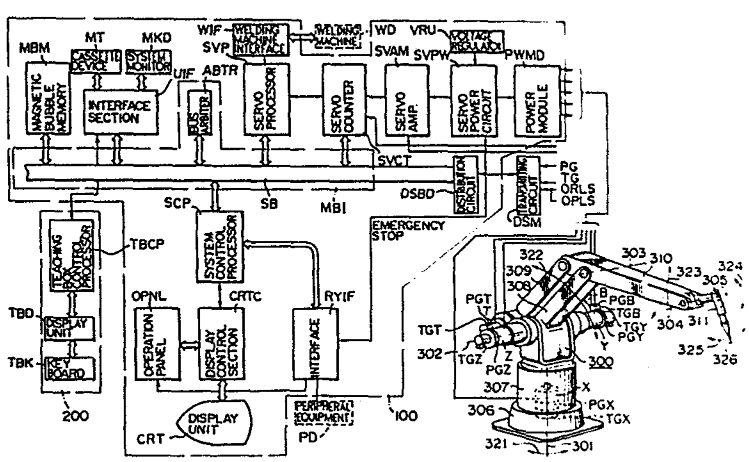

0148425

# METHOD AND APPARATUS FOR CONTROLLING ROBOT

The present invention relates to a method and apparatus for controlling an industrial robot suitable for being utilized to, in particular, a robot of the teaching playback type.

As is well known, in the robot of the teaching playback type, the operator moves the robot beforehand to make the robot store information about a sequence of desired work, positions and the like, and then the robot performs the desired work by reading out the stored information as required. To achieve such a function, a principal part of the control section is generally constituted by a digital computer, in particular, a microcomputer or the like. And the taught information is stored in a memory unit of the computer sequentially for each step of task in accordance with a teaching program set in the computer. Upon depressing, for example, a playback start command key disposed on a control console, as required, the computer responds to the command and reads out sequentially the taught information from the memory unit in accordance with a preset playback program, and controls and manipulates the robot to a desired condition.

The robot of this type has been set to perform the motions always one by one from the taught information of the first step, when the robot starts the motions again after the stoppage. As a result, for example, if the robot once stops, during welding works in accordance with the so-called long teaching program including many steps, by detecting by the control section any failures such as contact of the weld torch with the work, fusing of the wire, abnormality or malfunction of the work and accessories of the robot hand section and the like, or any other causes, it has been difficult to perform the work successively from that work position after the causes have been solved. For this reason, there has been a problem in the manipulatability of the conventional robots.

The computer which constitutes the principal part of the control section stores a teaching step which the robot is carrying out at present. Therefore, the above-mentioned problem in the manipulatability will be solved by storing and holding the teaching step which is being carried out at the time of the stoppage of the robot in the memory section, and by executing the control successively from the stored step by a restart command provided externally. However, this method involves a more serious problem than the one in the manipulatability. That is, the problem of safety. This will be described by way of a concrete example. For example, as illustrated in Fig. 1, it is assumed that with respect to a work W, positions as shown in the figure are taught in teaching steps N, N+1, N+2, ..., and while control information about linear interpolation between each step is taught together with the positions. And, by the start of playback, the working point of the robot moves from N to N+1, and the robot is assumed to stop from one cause or another at a position S on the way to N+2. And, in order to solve the cause, the robot is manually manipulated, and consequently, the working point is moved to a position So. At the time of the stop of the robot, the computer stores the teaching step N+2. For this reason, if the restart is executed under thus condition, the working point of the robot will move toward the teaching step N+2 straight as shown by the chain line, and the robot will collide with the works W as is also apparent from the figure.

Thus, although the afore-mentioned technique intended to improve the manipulatability is effective only for the improvement of the manipulatability, there is a problem of safety which is much more serious. For this reason, in the conventional robots, the function of restart from the stopping position on the way has not been realized until present time, solely because the problem of safety can not be solved.

The present invention was made in view of the above-mentioned problems, and its object is to provide a method and apparatus for controlling a robot in which the robot can be restarted from the stopping point on the way, and further the safety is ensured.

According to the analysis of the factors of the safety in restarting the robot from an arbitrary step, the safety is dependent upon a position of the moving member of the robot at the time of the restart. In other words, when the robot stops on the way during its motion from some cause, if the restart is possible under a condition in which all the status of the robot just before the stopping is retained, there will be entirely no problem in the safety. This means that, if the moving member of the robot stayes on a programmed movement path of the moving member of the robot between teaching points, no problem will be caused in the safety even if the robot is restarted from that position. If any problem arises in the safety, it is in such a case in hich the moving member of the robot is out of the programmed movement path.

The present invention was made based on the considerations described in the foregoings, and it is characterized in that, firstly, with respect to a programmed movement path of the moving member of the robot between predetermined teaching coordinate points, it is judged as to whether or not the coordinate value of the robot moving member in a stopped condition is within a predetermined allowable path range. Then, if the coordinate value of the robot moving member in the stopped condition is within the allowable path range, the robot is moved and controlled along the programmed path toward the next target teaching point from the stopping position.

Here, it should be noted that the term "robot moving member" is intended to mean a working point in such a case wherein the arrangement of the robot is simple, and the safety can be ensured by monitoring only the working point of, for example, the tip of a weld torch provided on the end of the robot, and further in another case wherein the robot is, for example, an articulated robot comprised of a combination of many axes, the "robot moving member" is intended to mean a selected axis for ensuring the safety or all the axes, and thus it is not limited only to the above-mentioned working point. From this, it will be appreciated that the programmed movement path is the path of the above-mentioned working point, the selected axis, or all the axes. The allowable path range is set beforehand with respect to the programmed path using this as a reference, depending on realization accuracy of a robot to be employed, an error range which can ensure the safety, and the like.

In addition, in moving and controlling the robot along a programmed path from a stopping position to the next target teaching point, there are various modes in the locus of the robot moving member depending on the manner of control. Firstly, the robot moving member is moved and controlled directly toward the next target teaching point from the stopping position. In another mode, information of a programmed path to the next target teaching point from a teaching point just one point on this side of the next target point is sequentially outputted, and the robot moving member is followed up sequentially to the programmed path. In this case, the robot might move back to that teaching point just one point on this side. However, since this retreat of the robot is within the programmed path, there is no problem in the safety. Further, in another mode, the robot is moved and controlled to return, once, to that teaching point just one point on this side, and from this point, the robot is moved and controlled toward the above-mentioned next target point. Also in this case, similarly to the above case, there is no problem in the safety. Further, although various other modes may be considered in moving and controlling the robot moving member depending upon the types, etc., of the robot, the present invention is not limited to these modes in the movement and control.

According to a preferred embodiment of the present invention, the programmed path is determined based the result of calculation obtained by interpolating and calculating as to a section between teaching coordinate points. This is particularly suitable when utilized in the case of an articulated robot and the like in which the arrangement of the axes is complicated and it is very difficult to readily determine the programmed path of the robot moving member from equations or the like. Further, in the judgement, the section between teaching coordinate points is interpolated and calculated sequentially, and a coordinate value of the robot moving member at each interpolated point is sequentially calculated, and it is determined as to whether an error between each coordinate value thus calculated and a coordinate value of the robot moving member in a stopped condition is within a predetermined range or not. In this manner, the restart from a point on the way becomes very smooth. Further, the judgement is to be made as to a section between teaching coordinate points which are located respectively before and behind the stopping position of the robot. By doing this, the restart of the robot can be made in a short time.

The present invention will be apparent from the following detailed description taken in conjunction with the accompanying drawings, in which:

Fig. 1 is a diagram for explaining the present invention;

Fig. 2 is a block diagram of an overall robot system of an embodiment according to the present invention;

Fig. 3 is a diagram of a path for explaining the present invention;

Figs. 4 and 5 are respectively processing flow charts showing the embodiment of the present invention;

Figs. 6 and 7 are diagrams for explaining the processing flow charts in Figs. 4 and 5;

Fig. 8 is a diagram showing an example of display on a display screen; and

Fig. 9 is a processing flow chart showing another embodiment of the present invention.

Hereinafter, an embodiment of the present invention will be described with reference to the drawings.

Fig. 2 is a block diagram showing an overall robot system, and it is generally divided into a robot main body 300, a control section 100 for controlling the robot main body 300, and a teaching section 200 for teaching a motion path to the robot 300. The robot main body 300 shown in this embodiment is of the articulated type, and comprised of five axes including a swivel axis 301, an upper arm axis 302, a forearm axis 303, a bending axis 304 and a twisting axis 305. The numeral 306 designates a base, 307 designates a swivel pedestal mounted swivelably on the base, and 308 and 309 designate upper arms which constitute a parallel link. The numeral 310 designates a forearm, and a tool suitable for the application of the robot, for example, a weld torch 311 is attached to the tip of the forearm 310. The characters X, Y, Z, B and T respectively designate swivel axis servomotor, upper arm axis servomotor, forearm axis servomotor, bending axis servomotor and twisting axis servomotor for respective axes 301, 302, 303, 304 and 305. The swivel axis servomotor X drives the swivel pedestal 307 to swivel about the swivel axis 301 in directions shown by the arrow 321. The upper arm axis motor Y rotatably drives the upper arms 308 and 309 about the upper arm axis 302 in directions shown by the arrow 322. The forearm axis motor Z rotatably drives the forearm 310 about the forearm axis 303 in directions shown by the arrow 323. The bending axis motor B drives the weld torch 311 to bend about the bending axis 304 in directions shown by the arrow 324. The twisting axis motor T drives the weld torch 311 to twist about the twisting axis 305 in directions shown by the arrow 325. Each of the axis motors X, Y, Z, B and T has on an axis coaxial with each rotation axis corresponding one of pulse generators PGX, PGY, PGZ, PGB and PGT and corresponding one of tachogenerators TGX, TGY, TGZ, TGB and TGT. Each of the pulse generators PGX, PGY, PGZ, PGB and PGT generates a pulse by rotation of corresponding one of the axis motors X, Y, Z, B and T, and these pulses are inputted to a servocounter SVCT which will be described later. The servocounter SVCT retains position data at respective times, and this data is monitored by a servoprocessor SVP which will be described later. Each of the tachogenerators TGX, TGY, TGZ, TGB and TGT inputs a rotational speed at respective times of corresponding one of the axis motors X, Y, Z, B, and T to a servoamplifier SVAM (which will be described later) as speed feedback data. In the arrangement described above, by suitably combining and driving the servomotors X, Y, Z, B and T of respective axes, a working-point 326 can be moved along a predetermined path.

Next, the robot control section 100 will be described. Firstly, the sending and receiving of information and the like are carried out in the following manner. A servopower circuit SVPW supplies electric power for the servomotors X, Y, Z, B and T of respective axes and for brakes (not shown but necessary) attached to the servomotors through a power module PWMD. A distribution circuit DSBD receives data from the pulse generators and tachogenerators of five axes, which data being sent from the robot main body 300 via a transmitting circuit DSM, and also receives data, etc., from an origin proximity limit switch OPLS, an overrun detecting limit switch ORLS, etc., and then the distribution circuit DSBD distributes the received data for each signal system, and sends out to a mother board MBI. The principal part of the robot control section 100 is arranged as follows. The mother board MBI connects each unit by a system bus SB. A magnetic bubble memory MBM stores a control program which is software for controlling the robot and stores a teaching program. An interface section UIF between units is provided with a memory which can be read and written by both a servoprocessor SVB which is a central processing unit (hereinafter referred to as a CPU) for interpolation calculation in a servosystem (described later), and a control processor which is a CPU for sequence control and display, and the interface section UIF is further provided with an auxiliary memory unit, e.g., an interface section of a cassette device MT, and is further provided with an interface area of the system monitor MKD. Furthermore, this interface section UIF functions as an intermediate portion interconnecting a teaching box (described later) and an operation panel OPNL. The cassette device MT performs saving of a teaching program stored in the memory unit MBM and loading the memory unit MBM with the saved teaching program. The system monitor MKD has a function as a debugging tool, and is provided with many input keyswitches and indicator units. A bus arbiter ABRT manages as to the system bus SB, that is, by which unit, e.g., memory unit MBM, servoprocessor SVP, etc., the system bus SB is exclusively used at the present time or will be exclusively used. The servoprocessor SVP has a read-only memory (hereinafter referred to as a ROM) and a read-write memory (hereinafter referred to as a RAM) of suitable storage capacity. In this ROM, a program loader is stored beforehand, and upon turning on a power supply to the system, the program loader takes a desired program from the memory unit MBM and places it in the RAM. And, after completion of an initial manipulation including origin alignment of the robot main body 300, etc., depending on a using mode, e.g., a teaching mode, playback mode, etc., the program loader takes a program corresponding to the mode from the memory unit MBM and places it in the RAM. The servoprocessor SVP executes a job, program, teaching of step or playback designated by a system control processor SCP (described later), and for example, it calculates interpolation as to a section between teaching points, and converts the result into a signal form utilizable by the servosystem, or outputs a position command value. Further, this servoprocessor SVP executes a control of a welding machine interface WIF (described later). The welding machine interface WIF has a function to transmit to a welding machine WD a command of, e.g., an arc ON or OFF from the servoprocessor SVP, or to transmit a signal of an abnormal operation, etc., of the welding machine WD to the servoprocessor. The servocounter SVCT counts the number of pulses from the pulse generators PGX, PGY, PGZ, PGB and PGT, and feeds back the counted result as position data to the servoprocessor SVP. A servoamplifier SVAM controls the speed of each axis based on the speed feedback data from the tachogenerators TGX, TGY, TGZ, TGB and TGT. A servopower section SVPW controls the current of motor armatures of the servomotors X, Y, Z, B and T. A power module PWMD is formed by gathering output stages, e.g., power transistors of the servoamplifier SVAM and by consolidating them in a module form. A voltage regulator VRU is used as an auxiliary power supply.

The system control processor SCP has an equivalent structure to the servoprocessor SVP, and is provided with a ROM and a RAM of a suitable storage capacity. However, at the initial time of the turning on of the power supply and the like, after being loaded with a predetermined program from the memory unit MBM, no replacement of the program is performed. This processor SCP executes generalizing management of inputs and outputs of the teaching box and operation panel OPNL, and an internal RAM is loaded with a program corresponding to these inputs and outputs from the memory unit MBM by the action of a program loader stored in the ROM. The operation panel OPNL is provided with a plurality of command keyswitches, and sends out data corresponding to a depressed keyswitch to the system control processor SCP via a display control section CRTC (described later), and displays on a display unit CRT. The display control section CRTC deals with the display of the keyswitch data from the operation panel OPNL on the display unit CRT, transmission of the content of the display to the system processor SCP, and further the display of the content commanded from the system control processor SCP on the display unit CRT. An interface RYIF deals with input and output signals for controlling a peripheral equipment PD, and also executes processing relating to an emergency stop switch. For this peripheral equipment, for example, if this robot is used for welding, a positioner and the like correspond thereto. As the display unit CRT, for example, a cathode-ray tube display unit or the like may be used.

The teaching box 200 is arranged as follows. The character TBK designates a keyboard provided in this teaching box, and TBD designates a display unit. A teaching box control processor TBCP functions to display data corresponding to a keyswitch depressed on the keyboard TBK on the display unit TBD, and at the same time sends out this content to the system control processor SCP. Further, the processor TBCP receives program step data under playback from the system control processor SCP via the unit interface UIF, and also executes display processing for displaying on the display unit TBD.

Fig. 3 is a diagram for explaining the embodiment, and in which steps which have already been taught are shown at N and N+1, and data of these positions, posture, etc., is, in the case of this embodiment, stored in a teaching data area of the memory unit MBM as angle data of articulation coordinates. A programmed path PA of the working point 326 is formed by teaching data. At STP, there is shown a position of the working point 326 which has passed the point N as the teaching program is executed in the playback mode and has stopped on its way to the next target teaching point (N+1) from some cause, and the cause of the stopping has been solved at the position STP. In other words, STP indicates the position of the working point 326 after the cause of the stopping has been solved. Further, in the embodiment, the continuous path control is realized by outputting the position data to the servosystem in each fixed period $\Delta t$ (sampling timing).

Figs. 4 and 5 are flow charts showing a playback program which is a basic program of a control system program for executing the playback of the teaching program stored in the memory unit MBM. This program is stored in the RAM of the servoprocessor SVP from the memory unit MBM by depressing a playback key disposed on the operation panel OPNL, and is executed by the servoprocessor SVP. Hereinafter, the processing operation will be described with reference to the drawings Figs. 4 and 5. Steps 31, 32, 33, ...., 43 show usual processing, that is, no step start is included on the way in the processing. Firstly, these steps will be described. Upon starting the execution of the playback mode, and when it is determined that the working point 326 of the robot is positioned at the point N, in step 31, teaching data of the step N+1 to which the working point 326 is to proceed from now on is read out from the memory unit MBM. In the case of this embodiment, an example is described in which the position data taught to the articulated robot is stored as each articulation axis angle, and thus the read data is a set of respective articulation axis angles. This set of articulation axis angles are expressed as EP ($\theta_{e1}$, $\theta_{e2}$, .....). In the following step 32, this articulation coordinate data is transformed into rectangular coordinate data. That is, a position ER (xe, ye, $\alpha$e, $\beta$e) of the step (N+1) in the rectangular coordinate system is obtained. In other words, the transformation as expressed by the equation ER = $f_{PR}$ (EP) is carried out. Next, in step 33, calculation of parameters corresponding to the interpolation mode set in the step N, such as linear interpolation, circular interpolation and articular interpolation. For example, in the case of the linear interpolation mode, the parameters include a distance of movement $\Delta L$ of the working point of the robot from the step N to the step N+1, and a set of variations $\Delta R$ of respective elements of x, y and z axes. These parameters are expressed by the following equations

$$\Delta R = ER - SR \quad \text{................} \quad (1)$$

where, SR (xs, ys, $\alpha$s, $\beta$s) is the starting point of motion of the robot,

($\Delta R$ is expressed by $\Delta x$, $\Delta y$, $\Delta z$ ...)

$$\Delta L = \sqrt{\Delta x^2 + \Delta y^2 + \Delta z^2} \quad \text{..........} \quad (2)$$

And, in order to reduce the real time processing at the time of motion of the robot as far as possible, these parameters are calculated before the start of the motion. Further, the starting point SR is given from the result of the previous interpolation point calculation, or as an initial value (the coordinate value of the point N, when the start is made from the step N). In step 34, calculation of a movement velocity Vn is carried out. This movement velocity Vn can be changed to a real time value by a velocity change key provided on the teaching box 200, however, where a slow acceleration and deceleration have been set at the time of teaching, this velocity Vn is expressed by a velocity diagram as shown in Fig. 6. And, in step 35, a distance of movement $\ell n$ from the point N is calculated. The calculation is made by the following equation

$$\ell n = \Delta t \sum_{i=1}^{n} Vn \qquad \text{.......... (3)}$$

where, Δt is the sampling period mentioned in the foregoing, and specifically, it is about 40 m sec. In this respect, the start point is not always at the step N, but it may be at the afore-mentioned start point SR. Accordingly, the movement distance $\ell n$ may be understood as

$$\ell n = \ell n\text{-}1 + \Delta t \times Vn.$$

In the following step 36, calculation of an interpolation point (sampling point) is carried out. In this case, both the coordinate point and the posture are obtained. That is, as shown in Fig. 7, the interpolation point $PR_N$ (xN, yN, zN, αN, βN) is calculated by the following equations

$$PR_N = \frac{\ell N}{\Delta L} (ER-SR) + SR = SR + \frac{\ell n}{\Delta L} \Delta R \qquad \text{...... (4)}$$

that is,

$$xN = xs + \frac{\ell N}{\Delta L} \Delta x \qquad \text{................ (5)}$$

$$yN = ys + \frac{\ell N}{\Delta L} \Delta y \qquad \text{................ (6)}$$

$$zN = zs + \frac{\ell N}{\Delta L} \Delta z \qquad \text{................ (7)}$$

$$\alpha N = \alpha s + \frac{\ell N}{\Delta L} \Delta\alpha \quad \ldots\ldots\ldots\ldots\ldots \quad (8)$$

$$\beta N = \beta s + \frac{\ell N}{\Delta L} \Delta\beta \quad \ldots\ldots\ldots\ldots\ldots \quad (9)$$

In step 37, completion of the interpolation calculation is judged in accordance with the equation

$$\Delta L \leqq \ell N + \mu \times V_N \times \Delta t \quad \ldots\ldots\ldots\ldots\ldots \quad (10)$$

where, $\mu$ is a constant in the program of the servoprocessor. And, if the equation is satisfied, it is considered that the interpolation calculation has been completed. In step 38, that is, when the interpolation has been completed, the teaching point (N+1) is used as the final interpolation position. In step 39, before outputting the result of the interpolation calculation as a sampling value, these data is transformed into each axis angle value, that is, it is transformed from the rectangular coordinate system into the articular coordinate system. This transformation is expressed by the equation $PP_n = f_{RP} (PR_n)$. In the following step 40, a waiting time processing is carried out in order to output the sampling data of the five axes simulaneously. In step 41, the angle data is converted to a pulse value which a pulse coder in the servosystem can deal with, and the converted value is outputted to the servosystem, and the following equation is used

$$Pcn = En \times e \times PPn \quad \ldots\ldots\ldots\ldots\ldots \quad (11)$$

where, Pcn is a pulse command value of each axis, En is a correction constant of each axis, and e is a resolving power constant of each axis. In step 42, a status flag in the step 37 is judged, and determines whether the interpolation calculation is to be finished or not. If this judgement is negative, returns to the step 34. In step 43, it is processed to wait until a difference between an axis angle value PPn outputted in step 43 and an actual axis angle (pulse coder value) of the robot falls within a range Dm commanded beforehand. That is, the positioning is made as completed when the following equation is satisfied

$$|Odm - Ocm| \leqq Dm \qquad \ldots\ldots\ldots\ldots\ldots (12)$$

where, m is a suffix of the axis Od is a command value, and Oc is a present value.

Seps 51, 52, 53, ... 60 are additional steps to enable the robot to start from an arbitrary position at which the robot has stopped. For this purpose, a command keyswitch, etc., are disposed, for example, on the operation panel OPNL. In step 51, a response is made to the depression of that keyswitch. And in step 52, data indicative of the actual position at which the robot is stopping is fetched. This data may be, as described in the foregoing, the position data of the working point 326, or the position data of a typical axis of the articulated robot 300. However, in the case of the embodiment, since much higher safety is desired, the position data of all the axes of the articulated robot 300 is made to be fetched. The position data fetched in this step 52 is stored in a predetermined area of the RAM within the servoprocessor. In the next step 53, a flag F indicative of the processing of the start on the way is established, and thereafter stores that the processing is of the start on the way. And, transfers the process to the above-mentioned step 31. In step 54, the flag F is cleared to indicate that the process is the aforementioned usual processing. And after the step 40, a step 55 is added. In this step 55, it is judged as to whether the process is the usual processing or the processing of the start on the way so that the process may be transferred to the step 41 or the step 56. This is judged from the status of the flag F in the steps 53 and 54. If the flag F is "1", that is, it is now in the process of the start on way, the process proceeds to step 56. In the step 56, it is determined to what extent the position of the robot in the stopped condition deviates from the angle data of respective axes interpolated and calculated in the step 39, and further it is decided whether the error is within a predetermined allowable range or not. This decision is carried out to each of the data of respective axes fetched in the step 52 and the interpolated axis data corresponding to the axes mentioned above. And, in this step 56, if all the data of respective axes of the robot 300 is within the allowable range of the interpolated axis data, then in step 57, the abovementioned flag F is cleared, and the process is transferred to the step 41. Consequently, hereafter, the robot 300 is controlled to move along a programmed path based on the interpolated data. Due to the fact that the flag F is cleared in the step 57, the process thereafter does not proceed to the step 56 from the step 55, but the robot 300 is controlled to move in accordance with the usual process described in the foregoing. In the step 56, if it is decided that the data of at least one axis of the robot 300 in the stopped condition is outside the allowable range, the process proceeds to step 58. This step 58 is similar to the step 42, and it is decided whether the interpolation is finished or not. If it is negative, the process is transferred to the step 34, and the calculation of the next interpolation point, and the comparison of that calculated data with the axis data of the robot 300 being stopped are repeated. As to the result of this, if all the interpolated axis data and the axis data of the robot 300 in the stopped condition do not satisfy the condition of the step 56, it is decided that the robot 300 in the stopped condition is out of the programmed path. And in step 59, the flag F is cleared. Then in step 60, in order to provide necessary various data to the operator, the data is displayed on the display unit CRT. As the data to be displayed, various kinds of data may be used, and in the case of this embodiment, it is designed to display the position data of the point N and the position data of the stopping robot 300 and the like. Fig. 8 shows an example of display on the display unit CRT. Further, the displayed data may be interpolated position data closest to the position of the stopping robot 300. This means that in the step 56, by sequentially storing an error with respect to each interpolated point, and in the process in the step 60, a position of the interpllated point having the smallest error may be displayed. In either instance, the operator can know that the position of the stopping robot 300 is not desirable for the start on its way. And, by making reference to the display data, the robot 300 is manually manipulated to approach the programmed path, and by giving a command of the start on its way again, the process is executed again from the step 51, and the start of the robot 300 on its way can be achieved safely.

In the embodiment described in the foregoing, a section between teaching points is sequentially interpolated by a designated interpolation mode, and the interpolated data is compared with an actual position of the stopping robot 300 and the result of the comparison is decided. However, these processes may be replaced by the following. That is, in case of that the safety is ensured by the decision only as to the working point 326, or in the case of that a programmed path between teaching points of the moving member, i.e., each axis of the robot is defined solely by an equation or the like, then the decision may be made directly by this equation or the like. Fig. 9 is a flow chart of an example of these cases. In step 90, upon depressing a command keyswitch for the start on the way, in step 91 teaching points N and N+1 are read from the memory unit MBM. In case of circular interpolation, a teaching point N+2 is also read. Successively, in step 92 position data of the stopping robot 300 is read. In step 93, it is decided based on the teaching data as to which interpolation mode, i.e., linear interpolation, circular interpolation or articular interpolation mode is designated, and depending on the decision, the process proceeds to any one of steps 94, 95 and 96. In these steps 94, 95 and 96, by the use of respective discrimination equations which can decide readily, it is decided whether or not the position of the stopping robot 300 is within an allowable range of the programmed path defined by these equations. An example of the principle of this decision is as follows. Supposing that the position of the teaching step N is expressed by ($X_n$, $Y_n$ and $Z_n$), and the position of the teaching step N+1 is expressed by ($X_{n+1}$, $Y_{n+1}$ and $Z_{n+1}$), and the stopping position of the robot is expressed by ($X_c$, $Y_c$ and $Z_c$), and in case of the linear interpolation, then a programmed path between the teaching steps N and N+1 is expressed by

$$\frac{x - X_n}{X_{n+1} - X_n} = \frac{y - Y_n}{Y_{n+1} - Y_n} = \frac{z - Z_n}{Z_{n+1} - Z_n} \quad .. \quad (13)$$

Thus, by substituting $x = X_c$, $y = Y_c$ and $z = Z_c$ in the discrimination equation, and if the equation is satisfied, then this shows that the stopping point of the robot 300 is on the programmed path. In this respect, it is quite natural to provide a allowable range in the actual decision. Similarly, as to the steps 95 and 96, path discrimination equations are prepared. And in these steps 95 and 96, if the discrimination equations are satisfied, the drive control of the robot 300 is executed, and if they are not satisfied, a step 97 similar to the step 60 is executed.

Furthermore, in the embodiment, as shown in Fig. 5, upon satisfaction of the condition of the step 56, via the step 57 in the step 41, the robot 300 is made to be driven by the interpolation data at that time. However, this may be carried out in an alternative manner. For example, after the condition of the step 56 is satisfied, the control may be transferred to the step 34 via the step 57. Alternatively, after the condition of the step 56 is satisfied, executing the stpe 57, and then the robot 300 is controlled to return to the teaching point N, and thereafter the process may be executed from the step 34. Modifications of such an extent will be apparent to those skilled in the art denpending on the specifications, etc., of robot to be applied.

Further, in the embodiment, the description is made limiting to the section between the teaching steps N and N+1 at which section the robot is stopping. However, the section in which the robot is stopping can be known beforehand. An example of this is as follows. In Fig. 4, in the step 31, a target teaching step toward which the robot is advancing is stored in the memory unit MBM. Even if the robot stops in an arbitrary section from some causes, this step is stored. For this reason, by making reference to this teaching step, it is possible to read out a step which is one step earlier. Further, when the robot stops, the process of the start on the way may be executed from the first step of the teaching program. However, in this case, it will take a time more or less to reach the section at which the robot is stopping. Further, it will be apparent that this section may be set manually by a setting switch or the like.

As will be apparent from the description in the foregoings, according to the present invention, it is possible to ascertain that the robot is positioned at a position along the programmed path, and by virtue of the fact that the robot is positioned at this position, the robot can be controlled to move to the next target teaching point. As a result, a method and apparatus for controlling the robot which is capable of starting the robot on its way safely can be provided.

CLAIMS:

1. A method of controlling a robot comprising the steps of:

with respect to a programmed movement path of a robot moving member (326; 301, 302, 303, 304, 305) between predetermined teaching coordinate points (N, N+1), deciding whether or not a coordinate value of said robot moving member (326; 301-305) in a stopped condition is within a predetermined allowable path range of said programmed movement path, and

when the coordinate value of said robot moving member in the stopped condition is within said allowable path range, controlling said robot (300) in the stopped condition to move from the stopping position (STP) toward the next target teaching point (N+1) along said programmed movement path.

2. A method according to claim 1, wherein said step of deciding whether or not a coordinate value of said robot moving member in a stopped condition is within a predetermined allowable range of said programmed movement path includes, to interpolate and calculate as to a section between said teaching coordinate points (N, N+1), to determine the programmed movement path based on the result of said calculation, and to decide, with respect to said determined programmed movement path, whether or not the coordinate value of said robot moving member in the stopped condition is within the predetermined allowable range of said programmed movement path.

3. A method according to claim 1, wherein said step of deciding whether or not a coordinate value of said robot moving member in a stopped condition is within a predetermined allowable range of said programmed movement path includes, to sequentially interpolate a section between said teaching coordinate points, to sequentially calculate a coordinate value of each interpolation point, and to decide whether or not the coordinate value of said robot moving member in the stopped condition is within the predetermined allowable range with respect to said calculated each coordinate value.

4. A method according to claim 1, wherein said step of deciding whether or not a coordinate value of said robot moving member in a stopped condition is within a predetermined allowable range of said programmed movement path is made as to a section between two teaching coordinate points respectively before and after the time of stop of said robot moving member.

5. A method according to claim 2, wherein said step of deciding whether or not a coordinate value of said robot moving member in a stopped condition is within a predetermined allowable range of said programmed movement path is made as to a section between two teaching coordinate points respectively before and after the time of stop of said robot moving member.

6. A method according to claim 3, wherein said step of deciding whether or not a coordinate value of said robot moving member in a stopped condition is within a predetermined allowable range of said programmed movement path is made as to a section between two teaching coordinate points respectively before and after the time of stop of said robot moving member.

7. An apparatus for controlling a robot comprising:

memory means (MBM) for storing a plurality of teaching coordinate points;

deciding means (100, SVP) for deciding, with respect to a programmed movement path between said teaching coordinate points stored in said memory means, whether or not a coordinate point of a robot moving member in a stopped condition is within a predetermined allowable path range of said programmed movement path;

driving means (X, Y, Z, B, T) for driving said robot moving member to move along said programmed movement path; and

driving command means (100, SVP), upon decision by said deciding means that the coordinate point of said robot moving member in the stopped condition is within the predetermined path range of said programmed movement path, for commanding and manipulating said driving means so that said robot moving member is driven to move from said stopping position toward a next target teaching point along said programmed movement path.

8. An apparatus according to claim 7, wherein said deciding means (100, SVP) includes interpolation calculation means for sequentially interpolating and calculating a section between said teaching coordinate points stored in said memory means (MBM), and for sequentially calculating a coordinate value of each interpolation point, and wherein said deciding means decides, with respect to the programmed movement path determined on the basis of said interpolated coordinate values, whether or not the coordinate point of said robot moving member in the stopped condition is within the predetermined allowable path range of said programmed movement path.

9. An apparatus according to claim 7, wherein said deciding means includes:

interpolation calculation means for sequentially interpolating and calculating the section between said teaching coordinate points stored in said memory means, and for sequentially calculating a coordinate value of each interpolation point, and

judging means for judging whether or not the coordinate point of said robot moving member in the stopped condition is within a predetermined allowable range with respect to the coordinate value of said each interpolation point calculated by said interpolation calculating means, and wherein depending on whether or not said robot moving member in the stopped condition is within the predetermined allowable range with respect to the coordinate value of said each interpolation point, it is decided whether or not said robot moving member in the stopped condition is within the predetermined allowable range of said programmed movement path.

10. An apparatus according to claim 7, wherein said deciding means decides as to a section between teaching coordinate points respectively before and after the time of stop of said robot moving member.

11. An apparatus according to claim 8, wherein said deciding means decides as to a section between teaching coordinate points respectively before and after the time of stop of said robot moving member.

12. An apparatus according to claim 9, wherein said deciding means decides as to a section between teaching coordinate points respectively before and after the time of stop of said robot moving member.

FIG. 1

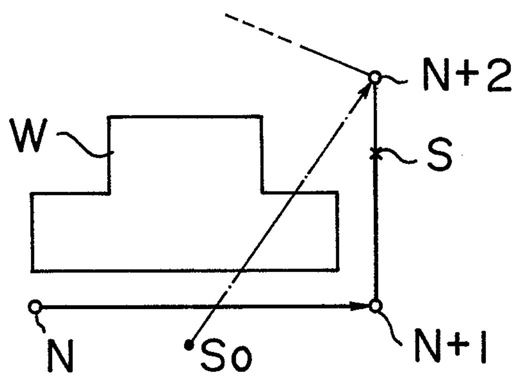


FIG. 3

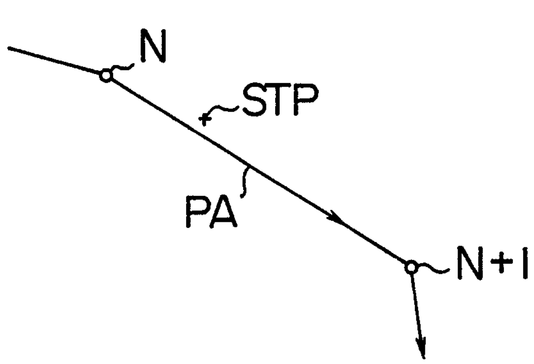

# FIG. 2

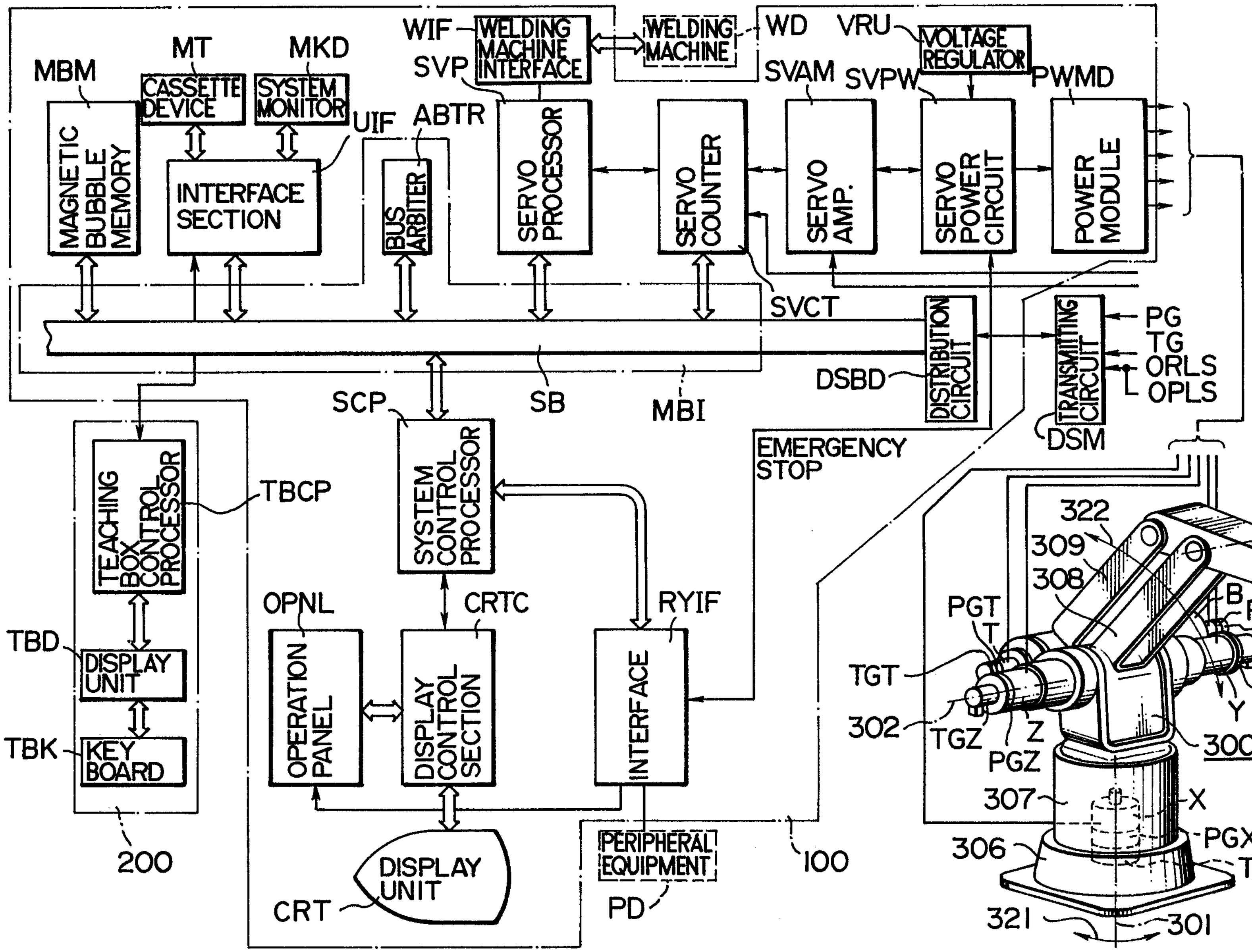
MBM
MAGNETIC BUBBLE MEMORY
MT
CASSETTE DEVICE
MKD
SYSTEM MONITOR
UIF
INTERFACE SECTION
ABTR
BUS ARBITER
WIF
WELDING MACHINE INTERFACE
SVP
SERVO PROCESSOR
WELDING MACHINE
WD
SERVO COUNTER
SVCT
VRU
VOLTAGE REGULATOR
SVAM
SERVO AMP.
SVPW
SERVO POWER CIRCUIT
PWMD
POWER MODULE
DISTRIBUTION CIRCUIT
DSBD
TRANSMITTING CIRCUIT
DSM
PG
TG
ORLS
OPLS
SB
MBI
SCP
SYSTEM CONTROL PROCESSOR
EMERGENCY STOP
TBCP
TEACHING BOX CONTROL PROCESSOR
TBD
DISPLAY UNIT
TBK
KEY BOARD
200
OPNL
OPERATION PANEL
CRTC
DISPLAY CONTROL SECTION
RYIF
INTERFACE
DISPLAY UNIT
CRT
PERIPHERAL EQUIPMENT
PD
100
322
309
308
303
310
323
324
305
304
311
325
326
B
PGB
TGB
TGY
PGY
Y
PGT
T
TGT
302
TGZ
Z
PGZ
300
307
X
PGX
TGX
306
321
301

FIG. 4

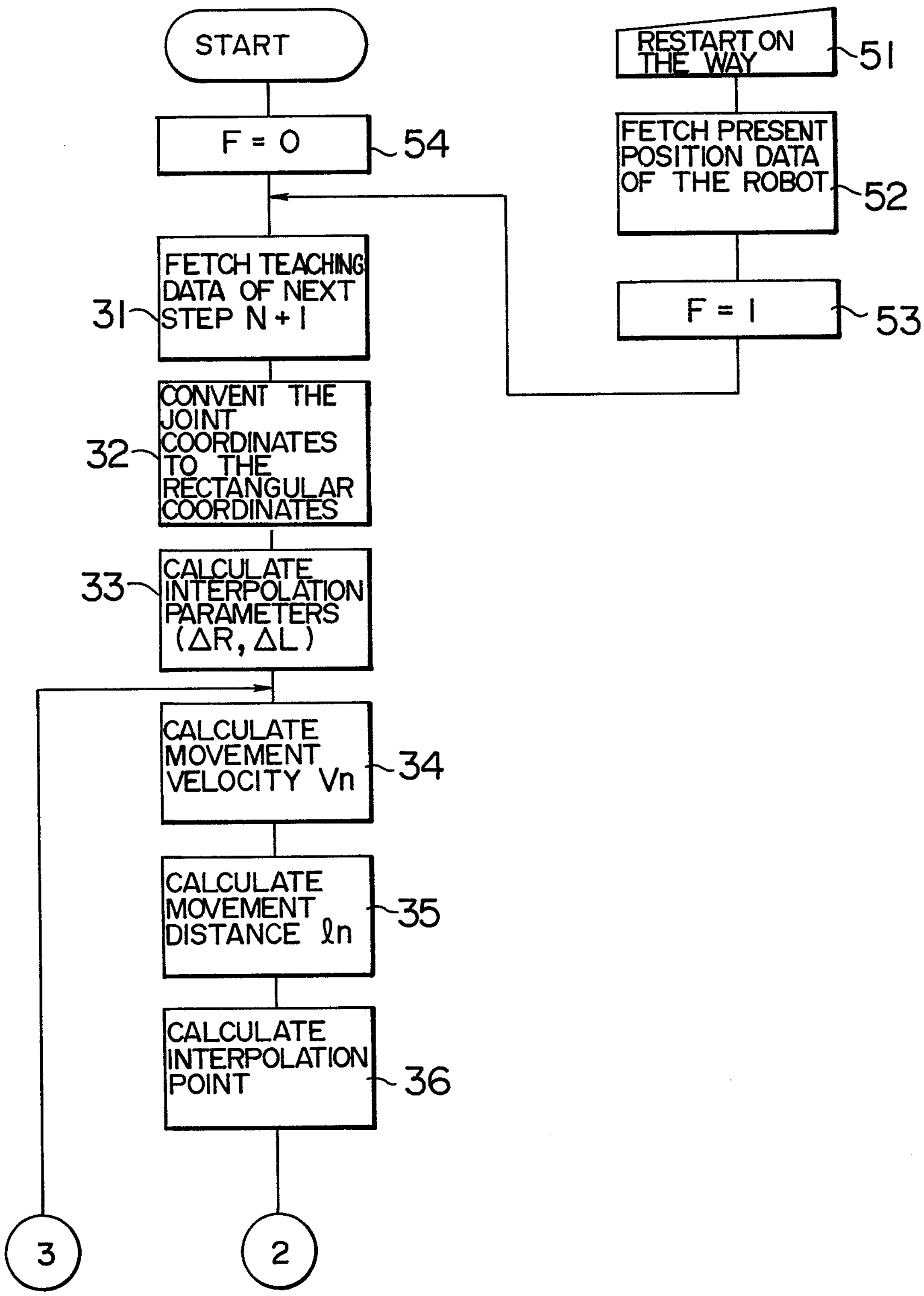
START
F = 0
54
FETCH TEACHING DATA OF NEXT STEP N + 1
31
CONVENT THE JOINT COORDINATES TO THE RECTANGULAR COORDINATES
32
CALCULATE INTERPOLATION PARAMETERS (ΔR, ΔL)
33
CALCULATE MOVEMENT VELOCITY Vn
34
CALCULATE MOVEMENT DISTANCE ℓn
35
CALCULATE INTERPOLATION POINT
36
RESTART ON THE WAY
51
FETCH PRESENT POSITION DATA OF THE ROBOT
52
F = 1
53
3
2

FIG. 5

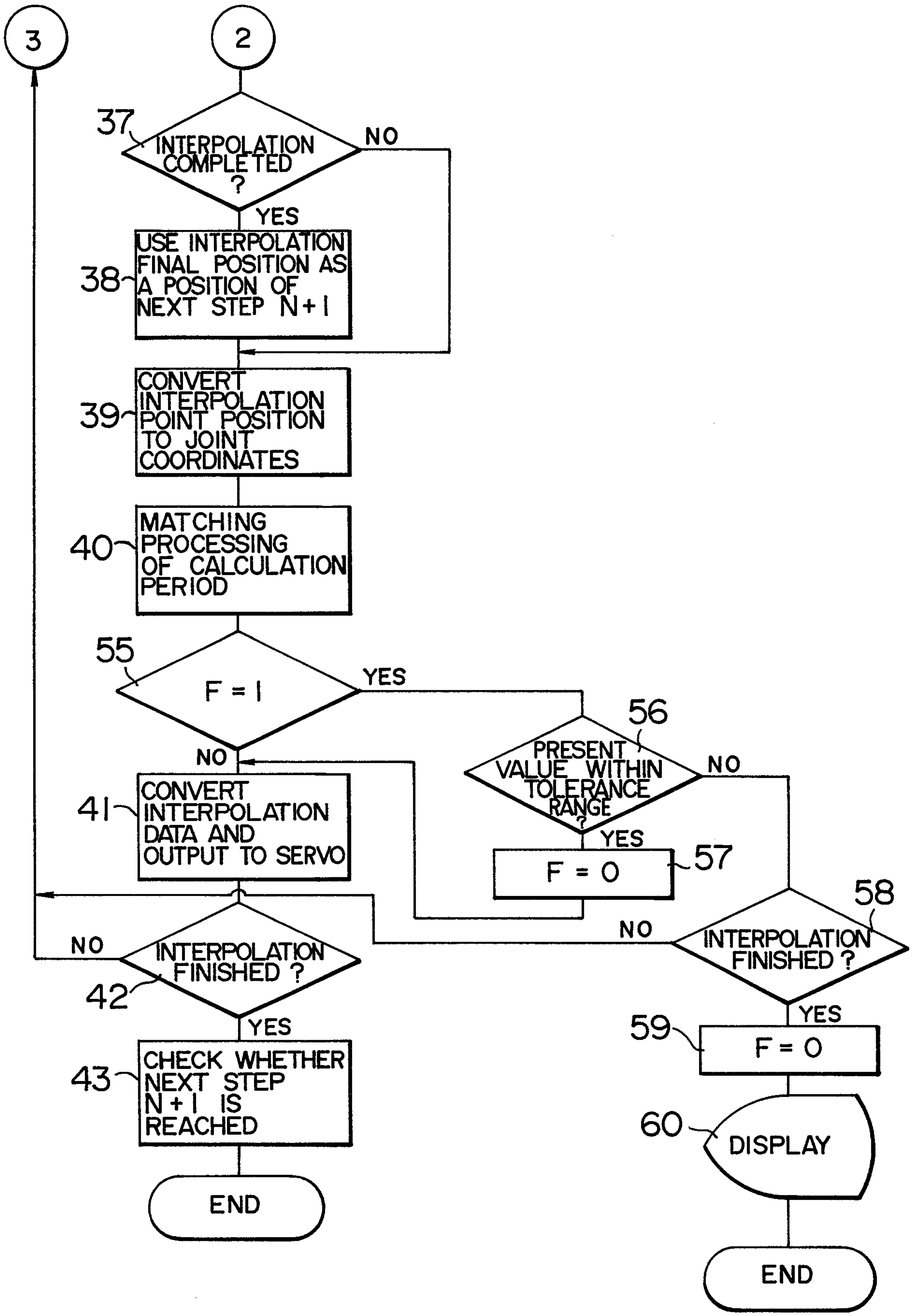

3
2
37
INTERPOLATION COMPLETED ?
NO
YES
38
USE INTERPOLATION FINAL POSITION AS A POSITION OF NEXT STEP N+1
39
CONVERT INTERPOLATION POINT POSITION TO JOINT COORDINATES
40
MATCHING PROCESSING OF CALCULATION PERIOD
55
F = 1
YES
NO
56
PRESENT VALUE WITHIN TOLERANCE RANGE ?
NO
YES
57
F = 0
41
CONVERT INTERPOLATION DATA AND OUTPUT TO SERVO
58
INTERPOLATION FINISHED ?
NO
NO
INTERPOLATION FINISHED ?
42
YES
YES
59
F = 0
43
CHECK WHETHER NEXT STEP N+1 IS REACHED
60
DISPLAY
END
END

# FIG. 6

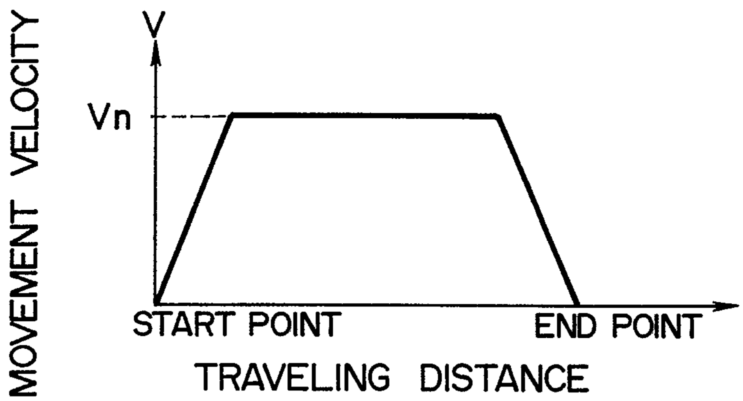


# FIG. 7

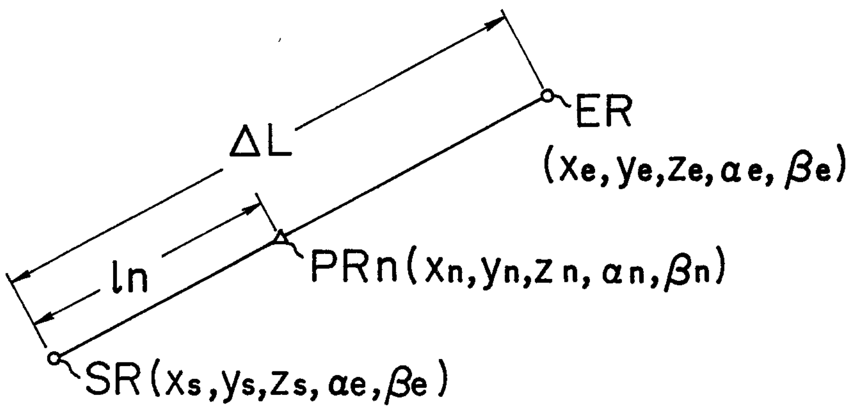


# FIG. 8

••DATA OF POINT N ON PATH••

| AXIS | POSITION OF N | PRESENT POSITION |
|---|---|---|
| SWIVEL | + 27.45° | + 25.51° |
| UPPER ARM | + 26.55° | - 14.16° |
| FORE ARM | - 17.14° | - 17.14° |
| BEND | 0.17° | 0.18° |
| TWIST | + 9.43° | + 9.13° |

FIG.9

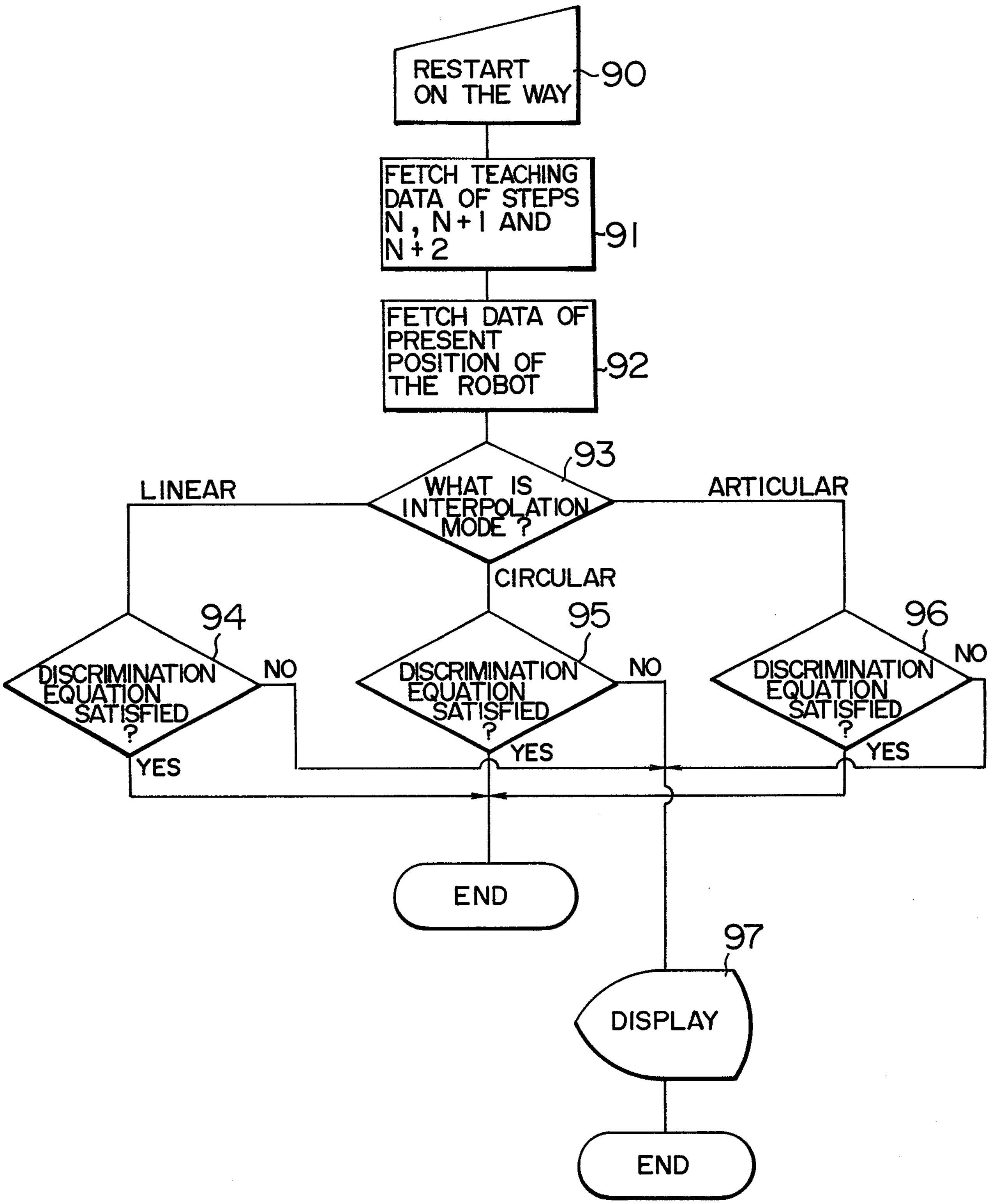
RESTART ON THE WAY
90
FETCH TEACHING DATA OF STEPS N, N+1 AND N+2
91
FETCH DATA OF PRESENT POSITION OF THE ROBOT
92
WHAT IS INTERPOLATION MODE ?
93
LINEAR
ARTICULAR
CIRCULAR
94
DISCRIMINATION EQUATION SATISFIED ?
NO
YES
95
DISCRIMINATION EQUATION SATISFIED ?
NO
YES
96
DISCRIMINATION EQUATION SATISFIED ?
NO
YES
END
97
DISPLAY
END